# FASCICULE DE BREVET EUROPEEN

(11) **EP 0 645 782 B1**
(45) Date de publication et mention de la délivrance du brevet: **26.02.1997**
(21) Numéro de dépôt: 94401710.2
(22) Date de dépôt: 26.07.1994
(51) Int. Cl.: H01B 17/26, H01F 38/28

(54) **Traversée de courant multifonctionnelle**
Mehrzweckstromdurchführung
Multifunctional current feedthrough

(30) Priorité: 28.07.1993 FR 9309281
(43) Date de publication de la demande: 29.03.1995
(73) Titulaire: GEC ALSTHOM T ET D SA, 75016 Paris (FR)
(72) Inventeur: Starck, Thierry, F-34740 Vendargues (FR)
(74) Mandataire: Fournier, Michel

(56) Documents cités:
- GB-A- 2 113 923
- US-A- 3 222 625
- US-A- 4 782 197

## Description

La présente invention trouve en particulier application dans les cellules à moyenne tension (en abrégé dans la suite: MT), comprenant notamment d'amont en aval un jeu de barres, un appareil de connexion tel qu'un disjoncteur ou un contacteur, et des câbles MT. L'invention trouve des applications dans d'autres domaines, comme il sera montré à la fin du présent mémoire. Mais pour la clarté de l'exposé, on se référera aux cellules MT.

Il est connu d'installer, dans ces cellules, un ou plusieurs transformateurs de courant par phase, pour alimenter les appareils de mesure ou de protection associés à la cellule. Ces transformateurs de courant (dans la suite en abrégé: TC) sont en général du type bobiné à isolement sec (par exemple moulage époxy) ou du type tore basse tension montés autour de traversées ou de cloches d'embrochage isolées moyenne tension, ou encore autour des câbles MT.

Les TC bobinés sont de construction difficile et coûteuse notamment lorsqu'ils sont logés dans des cellules où le rapport de la valeur du courant de court-circuit à la valeur du courant nominal est élévé. Ils deviennent alors volumineux et chers. Ils sont généralement logés entre l'appareil de connexion (disjoncteur par exemple) et les câbles MT et solidement fixés à la cellule, d'où une difficulté majeure d'accès en cas de remplacement sur incident ou pour réaliser un simple changement de rapport de transformation. Ces TC comportent des bornes primaires et des bornes secondaires qui sont logées sur le corps de l'appareil. Cette disposition entraîne des difficultés pour loger le circuit basse tension (en abrégé BT), qui doit être accessible à l'exploitant de la cellule MT et protégé du circuit MT. La grande diversité des spécifications fixées par les utilisateurs de cellules MT (puissance de précision, classe de précision, nombre de noyaux) entraîne un grand nombre de variantes de TC bobinés quant à la hauteur, la largeur, la position et le type de bornes primaires, les fixations à la cellule, etc... ce qui a pour conséquence d'engendrer un grand nombre de variantes de connexions primaires de raccordement au TC. De plus, le choix du type de TC conforme aux spécifications de l'utilisateur n'est souvent défini qu'au dernier moment de l'étude, d'où une pénalisation pour le constructeur de cellule qui ne peut pas inclure ces spécifications dans ses gammes de produit.

Les TC du type tore BT utilisés dans les cellules blindées MT sont en général montés autour de traversées d'embrochage de l'appareil de connexion principal (disjoncteur ou contacteur). Ils sont soit installés du côté de l'appareil de connexion, autour de la cloche recevant les contacts débrochables, et sont alors pénalisés par leur diamètre intérieur important, soit du côté du compartiment de raccordement des câbles MT autour d'une partie isolée du conducteur de la traversée. Dans ce cas, l'accessibilité aux tores BT est difficile et l'encombrement en longueur de la traversée d'embrochage est augmentée de l'épaisseur totale de l'empilement des tores.

Le montage de TC du type tore BT autour des câbles MT est utilisé essentiellement dans des cellules du type "Ring main unit" associé à des extrémités à prise embrochable. Le remplacement des TC n'est alors possible qu'après démontage complet de la prise.

Pour des cellules raccordées avec des câbles à extrémité non embrochable, le montage de TC tore BT directement autour des câbles ne s'est pas répandu du fait de l'encombrement important qu'il faudrait leur donner lorsque plus d'un câble par phase est nécessaire et du fait qu'il existe un nombre très important de type de câbles et d'extrémités dont le choix n'appartient pas toujours au fabricant de cellules et qui ne permet pas de standardiser les dimensions des tores.

Le document GB-A- 2 113 923 décrit un dispositif de montage d'un transformateur de courant sur le conducteur neutre d'un générateur, comprenant un manchon isolant entourant le conducteur, prolongé par un réceptacle cylindrique dans lequel est placé le transformateur.

Un but de la présenté invention est de réaliser une traversée qui réalise en une seule pièce les fonctions de traversée de courant, de transformateur de courant et de diviseur capacitif, permettant la simplification des cellules moyenne tension.

Un autre but de l'invention est de réaliser une traversée du type précité d'encombrement en longueur réduite par rapport aux traversées classiques supportant des TC du type tore.

Un autre but de l'invention est de réaliser une traversée réalisant la fonction TC et de coût réduit par rapport aux solutions à isolement sec.

Tous ces buts sont réalisés par la traversée isolante telle que définie dans les revendications.

L'invention est expliquée en détail par la description d'un exemple de réalisation, en référence au dessin annexé dans lequel:
- la figure 1 est une vue en perspective d'une traversée selon l'invention,
- la figure 2 est une vue en coupe axiale de la traversée de la figure 1,
- la figure 2A est une vue agrandie d'une partie de la figure 2,
- la figure 2B est une vue partielle en coupe axiale de l'extrémité d'une traversée isolante selon une variante de réalisation,
- la figure 3 est une vue en coupe de la traversée de l'invention, fixée à une paroi verticale d'une cellule moyenne tension,
- la figure 4 est une vue en coupe de la traversée de l'invention, fixée à une cloison horizontale d'une cellule moyenne tension,
- la figure 5 est une vue en coupe de la traversée de l'invention, montrant les lignes de fuite entre points nus sous tension et pièces à la masse,
- la figure 6 est une vue en coupe axiale d'une traversée selon une variante de réalisation de l'invention,
- la figure 7 est une vue en coupe axiale d'une traversée selon une autre variante,
- les figures 8A et 8B sont des schémas respectivement d'une traversée selon l'invention et d'une traversée de l'art antérieur, montrant le gain en encombrement apporté par l'invention.

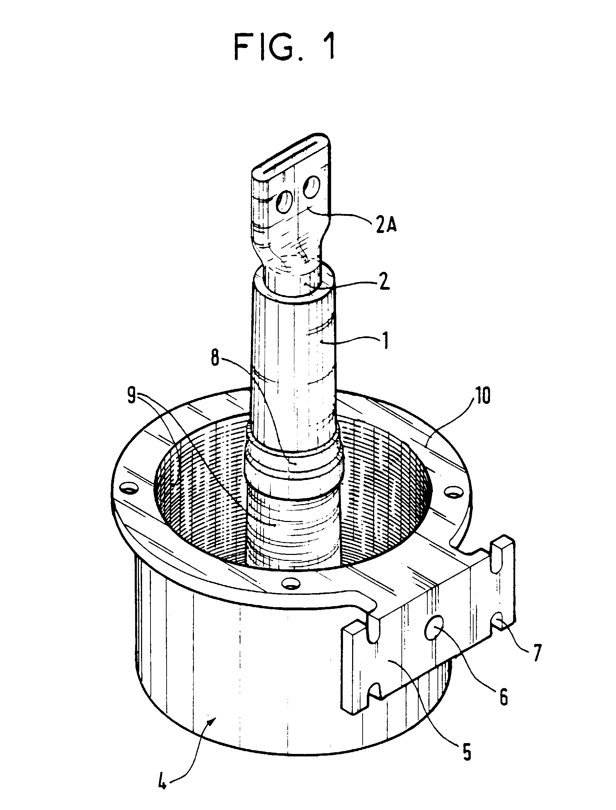

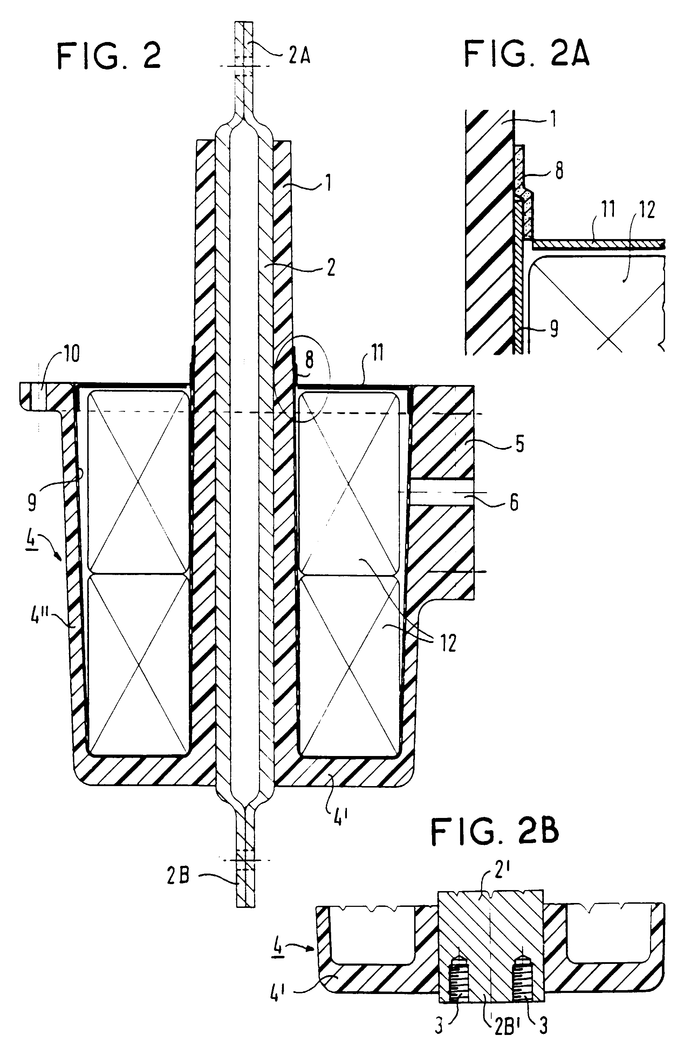

La traversée multifonctionnelle représentée dans les figures 1 et 2, est une pièce moulé en matériau isolant, tel que la résine époxy, comprenant un corps axial tubulaire 1 enserrant par surmoulage un conducteur métallique 2 terminé par des plages de raccordement 2A et 2B. La traversée comprend, venue de moulage avec le corps 1, un réceptacle de forme cylindrique, référencé de manière générale 4; le récéptacle porte sur son flan extérieur un pied support 5. Le conducteur est de préférence de forme tubulaire de façon à optimiser l'utilisation des sections conductrices et à conduire, pour une intensité nominale donnée, à un rayon de surisolement minimum. Les plages de raccordement 2A et 2B peuvent, dans ce cas, être obtenus par écrasement des extrémités du tube. Le conducteur de la traversée peut également est constitué par une barre ronde 2' (Fig. 2B) dont les extémités de raccordement, telle que 2B' sont munis de trous taraudés tels que 3.

Le réceptacle 4 possède un fond plat isolant 4', de préférence de forme circulaire, situé à une extrémité du conducteur; dans l'exemple des figures 1 et 2, c'est l'extrémité située près de la plage de raccordement 2B; le réceptacle comprend une jupe 4'' de forme cylindrique d'axe parallèle à l'axe du conducteur.

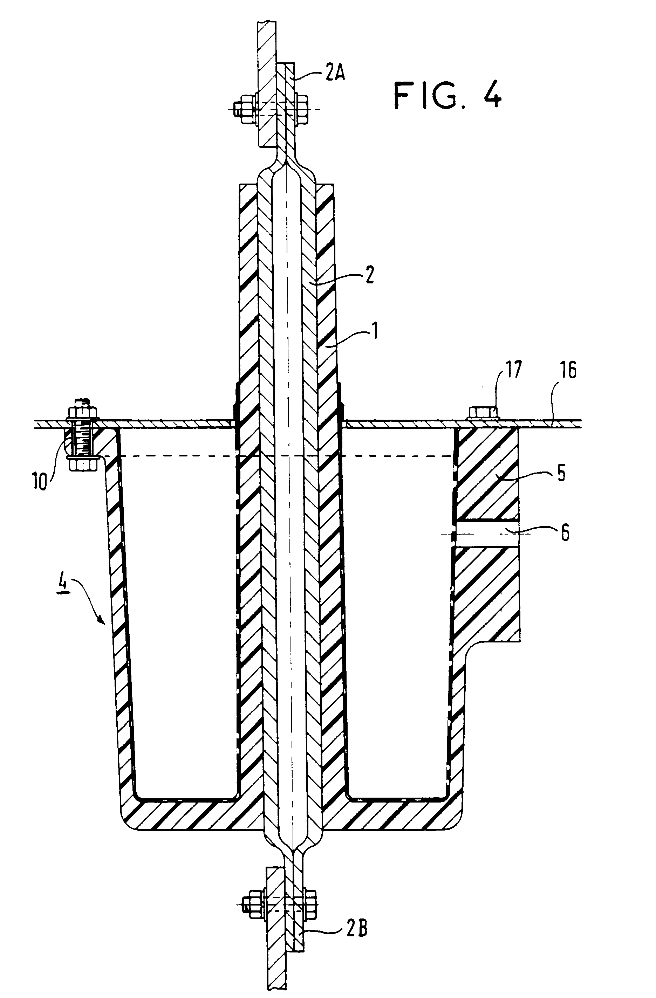

La jupe 4'' forme avec le fond 4' et le corps axial tubulaire 1 un réceptacle de forme torique. La hauteur de la jupe du réceptacle ainsi que son diamètre extérieur sont déterminés en fonction du nombre et des caractéristiques des TC toriques basse tension devant être placés dans le réceptacle. La jupe se termine par un bride de fixation 10 venant directement de moulage et possédant un nombre de trous suffisant pour permettre la fixation de la traversée à une paroi métallique mise à la terre et disposée perpendiculairement au conducteur, comme il est illustré dans la figure 4.

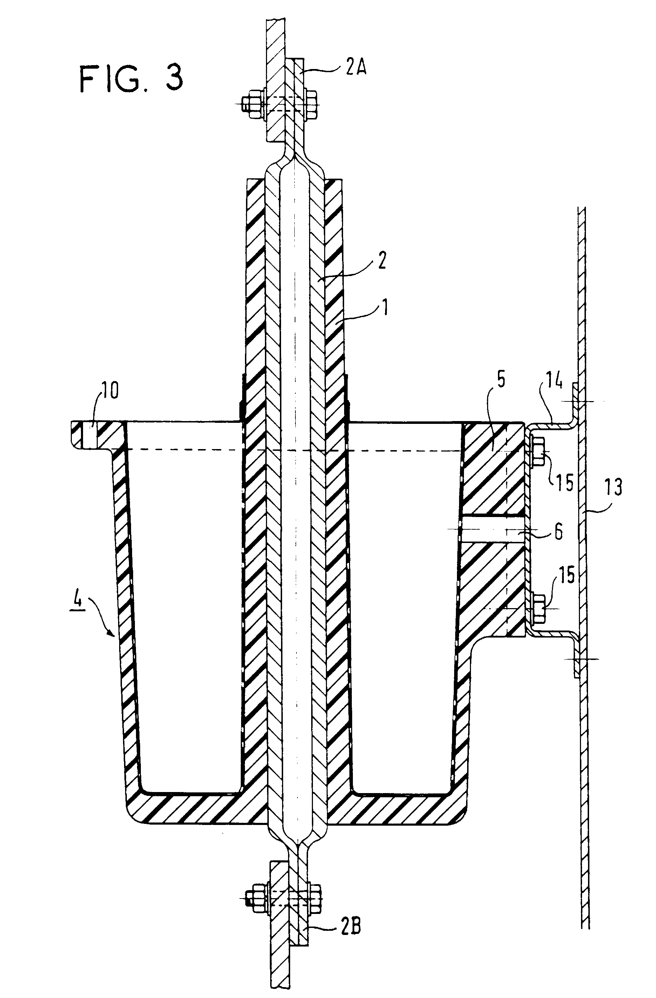

Le pied-support 5 est placé au plus près de l'extrémité de la bride de fixation 10. Il comporte des moyens de fixation latérale tels que des lumières 7, permettant la fixation de la traversée contre un support métallique parallèle au conducteur de la traversée, comme il est illustré dans la figure 3.

Le pied-support 5 peut comporter un trou 6 débouchant à l'intérieur du réceptacle 4 et utilisé pour le passage de fils conducteurs des tores.

Pour des raisons de facilité de moulage, et en particulier de démoulage, le corps 1 n'est pas rigoureusement cylindrique mais légèrement conique, le diamètre du corps du côté de l'extrémité 2A étant inférieur au diamètre du corps du côté de l'extrémité 2B. Pour les mêmes raisons, la cavité intérieure du réceptacle présente une surface latérale conique, le diamètre du fond de la cavité étant légèrement inférieure au diamètre de la cavité côté bride.

Les surfaces isolantes intérieures au réceptacle sont recouvertes d'une couche conductrice 9 destinée à la mise à la terre ou à un potentiel proche de celle-ci. Cette couche conductrice peut être placée par tout procédé connu, par exemple: métallisation par application de peinture conductrice, projection de métal en fusion, intégration lors du moulage d'un tissu métallique à proximité de la surface de l'isolant.

Cette mise au potentiel de la terre est nécessaire pour pouvoir placer au contact de la couche isolante enrobant le conducteur de la traversée des pièces métalliques portées au potentiel de la terre sans risque d'apparition d'effluves lorsque le conducteur est porté à un potentiel élevé.

La métallisation de la surface du corps axial 1 forme, avec le conducteur 2 et le diélectrique constitué par le corps axial, un condensateur moyenne tension; il est ainsi possible, en reliant ce condensateur à la terre à travers un condensateur BT ou une capacité parasite suffisamment grande, de réaliser un diviseur capacitif de tension capable d'alimenter un dispositif lumineux d'indication de présence de tension ou un relais de protection.

L'interruption de la couche conductrice sur le corps 1 à l'extrémité du réceptacle 4 peut conduire, lorsque le conducteur est porté à un potentiel suffisant, à l'apparition d'effluves électriques dus au champ électrique local très élevé apparaissant à l'extrémité de la couche conductrice. On peut y remédier par des dispositifs connus répartiteurs de champ électrique. Un moyen simple est l'application d'une couche 8 de vernis semi-conducteur à cheval entre l'extrémité de la couche métallique 9 et le corps axial isolant 1 (Fig. 2A).

Le réceptacle 4 est dimensionné pour recevoir un ou plusieurs transformateurs de courant basse-tension 12 standardisés pour leurs diamètres intérieur et extérieur. Les extrémités des enroulements sont évacués par le trou 6 du pied-support 5, pour être raccordés dans la cellule à des appareils de mesure ou de protection après avoir emprunté partout des passages protégés. Les TC toriques 12 sont enfilés sur l'extrémité 2A de la traversée; ils viennent s'encastrer dans le réceptacle 4. Lorsqu'ils sont en place, un capot métallique 11, mis à la terre par simple contact avec la métallisation 9 du réceptacle 4, vient les recouvrir pour les protéger des risques d'amorçage avec les conducteurs moyenne-tension; le ou les tores enfilés sur la traversée constituent ainsi les enroulements secondaires d'un transformateur de courant moyenne tension dont le primaire est le conducteur 2.

La figure 3 montre comment la traversée de l'invention peut être fixée à une paroi verticale 13 d'une cellule moyenne tension, à l'aide d'une tôle pliée 14 fixée sur la paroi et de boulons 15 coopérant avec le pied-support 5 de la traversée. La figure 3 montre également la liaison électrique avec les plages de raccordement 2A et 2B de la traversée.

La figure 4 montre comment la traversée peut être fixée à une plaque métallique transversale mise à la terre 16 de la cellule moyenne tension à l'aide de boulons 17 coopérant avec la bride 10 de la traversée.

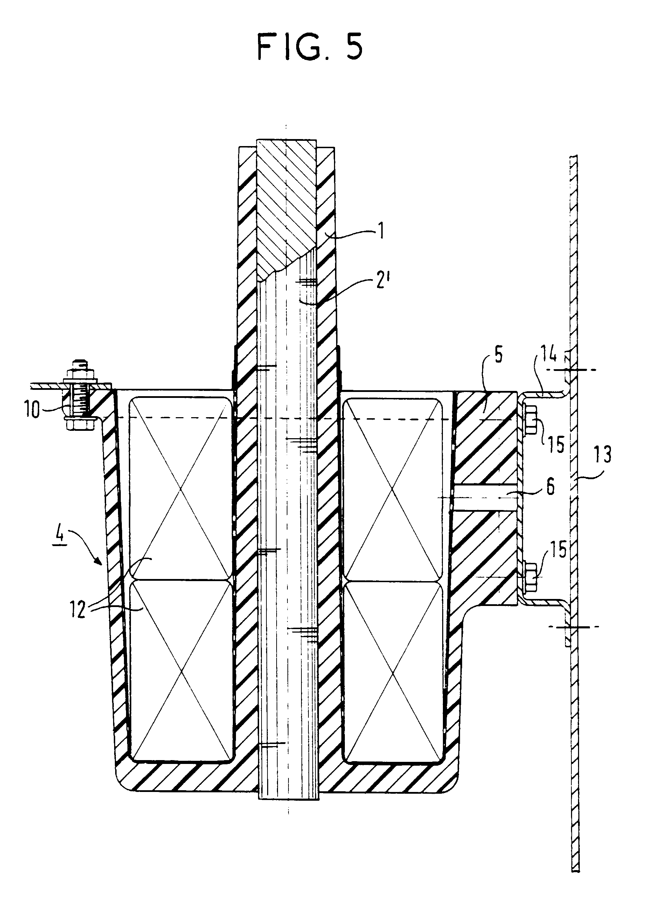

La figure 5 montre les lignes de fuite entre points nus sous tension et les pièces à la masse pour une traversée selon l'invention, fixée à une paroi verticale d'une cellule moyenne tension.

Lorsque la traversée est utilisée dans l'air ambiant, ces lignes de fuite doivent avoir une longueur suffisante pour éviter un vieillissement prématuré de la surface de l'isolant soumis au champ électrique. La longueur de la ligne de fuite doit être proportionnelle à la valeur de la tension efficace existant entre un point nu du conducteur sous tension et la terre. On remarquera que grâce à la présence du réceptacle 4, les lignes de fuite sont disposées en grande partie le long de la paroi du réceptacle parallèlement aux tores transformateurs de courant.

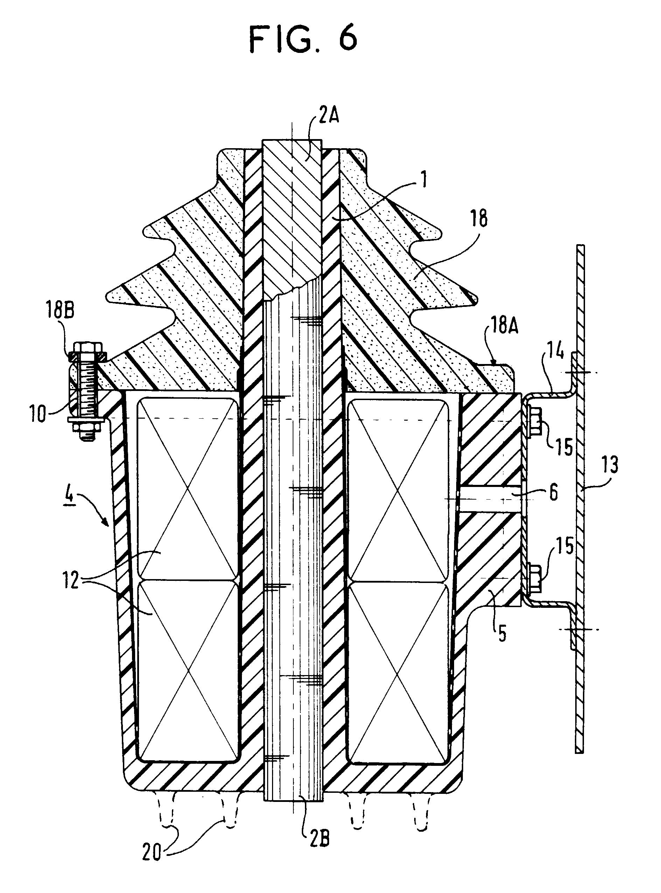

La figure 6 représente une traversée selon une variante de réalisation, ayant un niveau d'isolement accru par rapport aux traversées précédemment décrites, et qui utilise sans modification la pièce moulée d'origine. Un manchon 18, comportant une ou plusieurs ailettes circulaires, et réalisé en matière isolante souple (par exemple EPDM), est enfilé sur l'extrémité 2A de la traversée.

La forme conique du corps 1 coopère avec une forme complémentaire de l'alésage du manchon 18, pour assurer un emmanchement conique de ce manchon sur la traversée et donc d'assurer un contact étanche entre le manchon et le corps de la traversée. Afin de faciliter l'emmanchement, les surfaces isolantes venant en contact peuvent être enduites de graisse.

Le manchon possède à son extrémité inférieure une partie plate 18A comportant des trous situés en regard de ceux de la bride 10 de la traversée. Lorsque le manchon est emmanché à fond, sa partie plate vient en contact avec la bride. Un anneau circulaire plat 18B, de préférence en matériau isolant, est appliqué sur l'extrémité plate 18A du manchon 18 et vient la comprimer contre la bride 10 au moyen de vis et d'écrous. Ainsi monté, le manchon isolant 18 assure une étanchéité parfaite entre les tores BT 12 disposés dans le réceptacle et mis au potentiel de la terre, et les extrémités du conducteur 2A sous tension. Il permet ainsi d'augmenter sensiblement le niveau d'isolement de la traversée en:
- assurant une ligne de fuite plus importante entre la borne 2A et les éléments de fixation latérale 14,15 de la traversée,
- en augmentant la tenue diélectrique ente les bornes 2A et 2B et les tores BT.

La ligne de fuite entre la prise 2B et les éléments de fixation latérale 14, 15 peut être aisément améliorée, si cela est nécessaire, par l'adjonction lors du moulage d'une ou de plusieurs ailettes concentriques 20 disposée autour de la prise de raccordement 2B.

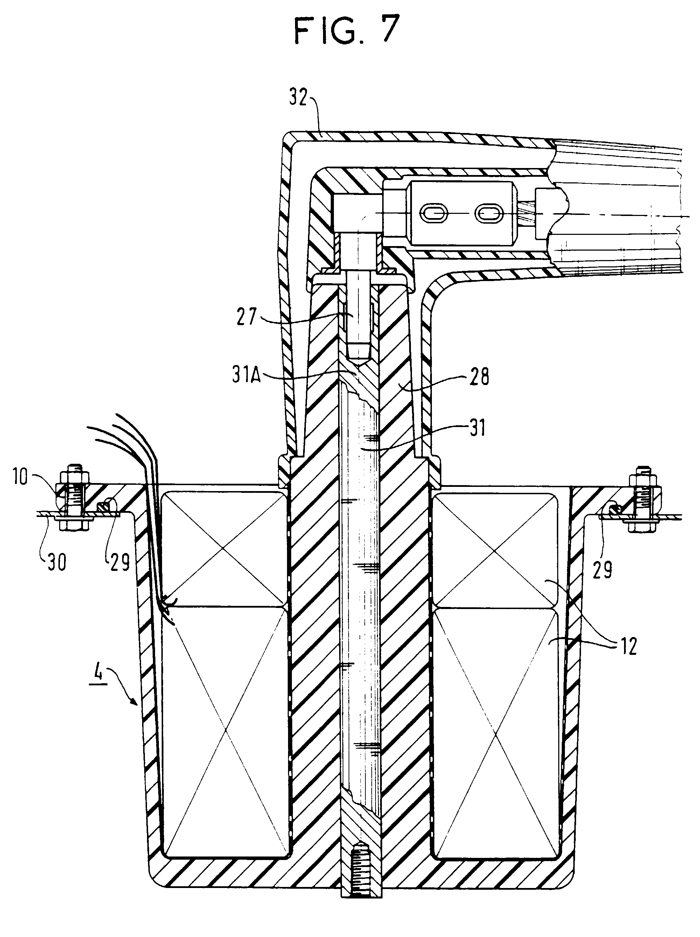

La figure 7 représente une vue en coupe d'une autre variante de la traversée décrite ci-dessus.

Le conducteur 31 de la traversée possède à son extrémité 31A un logement creux contenant une douille de contact glissant 27 de type connu. L'extrémité 28 du corps de traversée située à l'extérieur du réceptacle est un cône de dimensions normalisées destiné à recevoir une extrémité de câble MT embrochable 32 de type connu. La bride de fixation 10 possède sur une de ses faces, une gorge sur toute sa circonférence, qui permet le logement d'un joint d'étanchéité 29. La bride 10 de la traversée est serrée contre une cloison métallique 30 par exemple au travers de ses trous de fixation par un système goujon soudé-écrou, assurant la compression du joint 29 entre la bride 10 et la cloison 30, et ainsi l'étanchéité entre les deux zones situées de part et d'autre du réceptacle 4. Ainsi réalisée, la traversée peut être utilisée avantageusement comme traversée étanche de cellules blindées isolées au gaz SF6, avec transformateur de courant et diviseur capacitif intégré. De plus, ce type de traversée permet le remplacement des tores transformateurs de courant sans nécessité de démontage de l'extrémité embrochable. Il suffit pour cela de débrocher la prise.

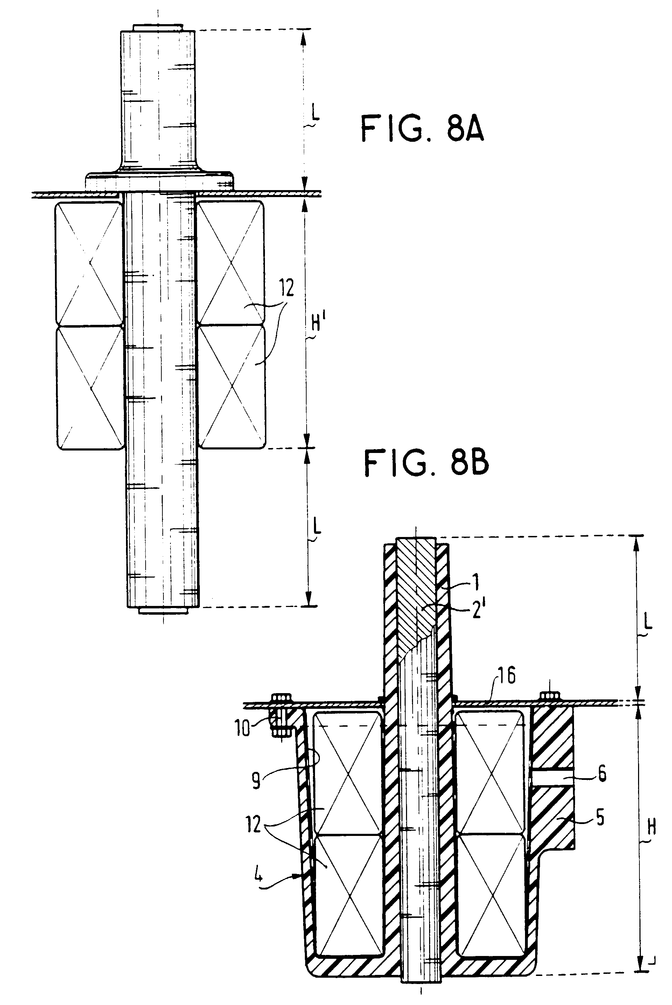

La figure 8A est un schéma d'une traversée de l'art antérieur; sa longueur totale est égale à H + 2L, où H est la hauteur totale des transformateurs de courant, et L la distance d'isolement à la tension nominale de la cellule.

La figure 8B est un schéma d'une traversée selon l'invention, montrant que la longueur totale est réduite à H + L, soit une diminution d'une distance d'isolement L.

La traversée multifonctionnelle décrite ci-dessus dans plusieurs variantes de réalisation remplit les objectifs définis plus haut et présente de nombreux autres avantages.

En intégrant les fonctions de traversée de courant, de transformateur de courant et de diviseur capacitif en une seule pièce, elle permet une simplification des cellules moyenne tension.

L'encombrement en longueur de la traversée multifonctionnelle est réduite d'environ une distance d'isolement par rapport aux solutions classiques de traversée supportant des tores, comme le démontre la comparaison des figures 8A et 8B.

La traversée possède des éléments de fixation obtenus directement de moulage qui permettent sa fixation sur un plan perpendiculaire au conducteur ou parallèle à celui-ci.

La traversée équipée de tores transformateurs de courant BT constitue un transformateur de courant MT de coût sensiblement réduit par rapport aux solutions à isolement MT (noyaux toriques moulés dans la résine). De plus, les transformateurs de courant tore possèdent une tenue de courant de court-circuit plus grande que les transformateurs de courant bobinés dans le domaine des petits rapports.

Les transformateurs de courant d'une cellule moyenne tension, qui font partie des exigences du client utilisateur, ne pénalisent plus le constructeur de cellules puisqu'ils peuvent être installés sur la traversée au dernier moment. Sur site, les tores transformateurs de courant sont facilement démontables pour remplacement.

La protection des circuits BT (enroulements des tores) est réalisée de façon simple et efficace grâce à la métallisation des parois internes du réceptacle et à un capot cylindrique métallique venant coiffer le réceptacle. L'évacuation de la filerie des enroulements des tores s'effectue à travers un passage à l'intérieur du pied de fixation latérale.

La métallisation des parois internes du réceptacle peut servir de capacité de tête d'un diviseur capacitif de tension.

Le niveau d'isolement de la traversée peut être porté à une valeur supérieure sans modification d'encombrement par simple adjonction d'un manchon isolant s'emmanchant sur une extrémité de la traversée.

Pour toutes ces raisons, ce type d'appareil apporte des avantages importants de normalisation et de prix par rapport à des solutions de transformateurs de courant traditionnelles.

La solution telle que décrite ci-dessus est utilisable par simple transposition homothétique de 3,3 à 36kV. Le sous-ensemble traversée-capteur de courant est utilisable normalement partout dans une configuration de cellule MT. Il peut être utilisé soit en traversée entre compartiments de cellules blindées ou comme simple support de transformateur de courant et de diviseur capacitif.

En variante, la traversée multifonctionnelle peut être utilisée avantageusement comme traversée de courant étanche avec cône standardisé de raccordement pour prise embrochable. Elle présente alors l'avantage important de permettre de remplacer les tores transformateurs de courant BT par simple débrochage des prises de courant sans démontage de la prise du câble MT associé.

La traversée décrite ci-dessus peut être facilement transposable en haute tension et notamment dans les postes blindés ayant les trois phases sous une seule enveloppe métallique, où elle facilite le montage des transformateurs de courant.

## Revendications

1. Traversée de courant pour cellule à moyenne tension réalisée par surmoulage d'une résine isolante autour d'un conducteur métallique rectiligne (2) possédant des plages de raccordement à ses extrémités (2A, 2B), ladite traversée comprenant un corps axial (1) autour dudit conducteur et un réceptacle sensiblement cylindrique (4) venu de moulage avec ledit corps cylindrique , ledit réceptacle comportant un fond plat (4') et une jupe latérale axial (4") s'étendant coaxialement audit corps (1), ledit fond étant sensiblement disposé à l'une des extrémités (2B) de raccordement dudit conducteur, ledit corps axial (1) s'étendant au-dessus du niveau supérieur de la jupe du réceptacle (4) sur une distance sensiblement égale à la distance d'isolement à la tension nominale de la cellule.

2. Traversée de courant selon la revendication 1, caractérisée en ce que les parois intérieures de ladite jupe (4") ainsi que la surface dudit corps (1), jusqu'au niveau de la bride (10), sont recouvertes d'une couche conductrice (9).

3. Traversée de courant selon la revendication 2, caractérisée en ce que la couche conductrice (9) se termine autour du corps (1) par un dispositif répartiteur de champ (8) tel qu'une couche de vernis semi-conducteur.

4. Traversée de courant selon l'une des revendications 1 à 3, caractérisée en ce que le volume du réceptacle (4) contient au moins un noyau torique à enroulement basse tension (12) formant avec le conducteur de la traversée un transformateur de courant moyenne tension, ledit noyau torique étant protégé contre les risques d'amorçage avec les points nus sous tension par un capot métallique (11) muni d'un trou lui permettant d'être enfilé sur le corps axial (1), ledit capot étant mis à la masse par contact avec la métallisation interne du réceptacle.

5. Traversée de courant selon l'une des revendications 1 à 4, caractérisée en ce qu'elle comporte un pied-support (5) en matière isolante disposé solidairement à la face extérieure du réceptacle (4), ledit pied-support possédant un plan de fixation permettant sa fixation à une paroi métallique parallèle à l'axe de la traversée.

6. Traversée de courant selon la revendication 5, caractérisée en ce que le pied-support (5) vient de moulage avec le reste de la traversée.

7. Traversée de courant selon l'une des revendications 5 et 6, caractérisée en ce que le pied-support posséde un trou (6) débouchant à l'intérieur du réceptacle et destiné au passage de la filerie des noyaux capteurs de courant.

8. Traversée de courant selon l'une des revendications 2 à 7, caractérisée en ce que la métallisation (9) du corps (2) constitue avec le conducteur (1) une capacité moyenne tension qui, mise à la masse à travers un condensateur basse tension ou une capacité parasite située à l'extérieur de la traversée de courant, forme ainsi un diviseur capacitif de tension capable d'alimenter un dispositif de protection ou de signalisation lumineuse de présence de tension sur le conducteur de la traversée.

9. Traversée de courant selon l'une des revendications 1 à 8, caractérisée en ce que le corps (1) possède, au moins entre son extrémité supérieure (2A) et le plan de la bride, une forme conique permettant l'emmanchement d'un manchon isolant (18) en matériau souple, ledit manchon possédant une extrémité inférieure plane munie de trous pouvant être mis en regard des trous de la bride (10), permettant la fixation du manchon sur ladite bride assurant ainsi la fermeture du réceptacle.

10. Traversée de courant selon la revendication 9, caractérisée en ce que la fixation du manchon (18) sur la bride (10) est réalisée par l'intermédiaire d'un anneau isolant (18B) assurant l'étanchéité entre l'intérieur et l'extérieur du réceptacle, par compression uniforme de l'extrémitè (18A) du manchon (18) sur la bride (10).

11. Traversée de courant selon l'une des revendications 9 et 10, caractérisée en ce que le manchon comprend des ailettes.

12. Traversée de courant selon l'une des revendications 1 à 11, caractérisée en ce que le fond (4') comprend extérieurement une ou plusieurs ailettes concentriques (20) venues de moulage.

13. Traversée de courant selon l'une des revendications 1 à 12, caractérisée en ce que le conducteur (31) est de section circulaire et possède à son extrémité supérieure (31A) un trou axial permettant de recevoir un contact glissant (27), le corps étant à sa partie supérieure un cône de dimensions normalisées permettant de recevoir une prise embrochable (32) de câble moyenne tension.

## Patentansprüche

1. Stromdurchführung für eine Mittelspannungszelle, indem ein Isolierharz um einen geradlinigen metallischen Leiter (2) herumgegossen wird, der an seinen Enden (2A, 2B) Anschlußbereiche besitzt, wobei die Durchführung einen axialen Körper (1) um den Leiter herum und ein im wesentlichen zylindrisches Gehäuse (4) besitzt, das zusammen mit dem axialen Körper einen Gießkörper bildet und einen flachen Boden (4') sowie eine zylindrische Seitenwand (4") besitzt, die koaxial zum Körper (1) verläuft, und wobei der Boden im wesentlichen an einem der Anschlußenden (2B) des Leiters liegt und der axiale Körper (1) sich über die obere Ebene der Wand des Gehäuses (4) um einen Abstand hinaus erstreckt, der im wesentlichen dem Isolationsabstand bei Nennspannung der Zelle entspricht.

2. Stromdurchführung nach Anspruch 1, dadurch gekennzeichnet, daß die Innenseite der Wand (4") des Gehäuses sowie die Oberfläche des Körpers (1) bis zur Höhe des Flansches (10) mit einer leitenden Schicht (9) bedeckt sind.

3. Stromdurchführung nach Anspruch 2, dadurch gekennzeichnet, daß die leitende Schicht (9) um den Körper (1) herum in einer Feldverteilungsvorrichtung (8) endet, wie z.B. einer halbleitenden Lackschicht.

4. Stromdurchführung nach einem der Ansprüche 1 bis 3, dadurch gekennzeichnet, daß das Gehäuse (4) mindestens einen Ringkern mit einer Niederspannungswicklung (12) enthält, die mit dem Leiter der Durchführung einen Mittelspannungs-Stromtransformator bildet, wobei der Ringkern gegen Entladungen mit den blanken unter Spannung stehenden Punkten durch einen Metalldeckel (11) geschützt ist, der ein Loch aufweist, durch das er auf den axialen Körper (1) aufgesteckt werden kann, wobei der Deckel durch Kontakt mit der inneren Metallbeschichtung des Gehäuses an Masse gelegt ist.

5. Stromdurchführung nach einem der Ansprüche 1 bis 4, dadurch gekennzeichnet, daß sie einen Fuß (5) aus Isoliermaterial besitzt, der fest an der Außenseite des Gehäuses (4) angebracht ist und eine Befestigungsebene besitzt, über die er an einer parallel zur Achse der Durchführung verlaufenden Metallwand befestigt werden kann.

6. Stromdurchführung nach Anspruch 5, dadurch gekennzeichnet, daß der Fuß (5) mit der übrigen Durchführung gemeinsam gegossen ist.

7. Stromdurchführung nach einem der Ansprüche 5 und 6, dadurch gekennzeichnet, daß der Fuß ein Loch (6) besitzt, das in das Gehäuse mündet und für den Durchlaß der Drähte der Transformatorkerne bestimmt ist.

8. Stromdurchführung nach einem der Ansprüche 2 bis 7, dadurch gekennzeichnet, daß die Metallbeschichtung (9) des Körpers (2) mit dem Leiter (1) einen Mittelspannungskondensator bildet, der über einen Niederspannungskondensator oder eine außerhalb der Stromdurchführung liegende Störkapazität an Masse gelegt einen kapazitiven Spannungsteiler bildet, der eine Schutz- oder optische Signalvorrichtung für das Vorliegen der Spannung auf dem Leiter der Durchführung speisen kann.

9. Stromdurchführung nach einem der Ansprüche 1 bis 8, dadurch gekennzeichnet, daß der Körper (1) mindestens zwischen seinem oberen Ende (2A) und der Flanschebene eine konische Form besitzt, die es ermöglicht, eine Isolierhülse (18) aus nachgiebigem Material aufzuziehen, die ein ebenes unteres Ende mit Löchern besitzt, welche mit Löchern in dem Flansch (10) in Flucht gebracht werden können, so daß die Befestigung der Hülse auf dem Flansch und somit ein Verschluß des Gehäuses ermöglicht werden.

10. Stromdurchführung nach Anspruch 9, dadurch gekennzeichnet, daß die Befestigung der Hülse (18) auf dem Flansch (10) mit Hilfe eines Isolierrings (18B) erfolgt, der die Dichtheit zwischen der Innen- und Außenseite des Gehäuses durch gleichmäßiges Andrücken des Endes der Hülse auf den Flansch (10) gewährleistet.

11. Stromdurchführung nach einem der Ansprüche 9 und 10, dadurch gekennzeichnet, daß die Hülse Rippen enthält.

12. Stromdurchführung nach einem der Ansprüche 1 bis 11, dadurch gekennzeichnet, daß der Boden (4') auf der Außenseite eine oder mehrere konzentrische Rippen (20) enthält, die beim Gießen entstanden sind.

13. Stromdurchführung nach einem der Ansprüche 1 bis 12, dadurch gekennzeichnet, daß der Leiter (31) einen kreisförmigen Querschnitt besitzt und an seinem oberen Ende (31A) ein axiales Loch aufweist, in das ein Gleitkontakt (27) eindringen kann, wobei der Körper in seinem oberen Teil einen Konus mit Normabmessungen besitzt, auf den ein steckbarer Mittelspannungs-Kabelanschluß (32) aufgesetzt werden kann.

## Claims

1. A current feedthrough for a medium-voltage bay, which feedthrough is made by over-molding an insulating resin around a rectilinear metal conductor (2) having connection tabs at its ends (2A, 2B), said feedthrough including an axial body (1) around said conductor and a substantially cylindrical receptacle (4) integrally molded with said cylindrical body, said receptacle including a flat bottom (4') and a cylindrical side skirt (4") extending coaxially to said body (1), said bottom being disposed substantially at one of the connection ends (2B) of said conductor, said axial body (1) extending above the top of the skirt of the receptacle (4) over a distance substantially equal to the insulation distance at the nominal voltage of the bay.

2. A current feedthrough according to claim 1, characterized in that the inside walls of said skirt (4") and the surface of said body (1) are covered with a conductive layer (9) up to the level of the flange (10).

3. A current feedthrough according to claim 2, characterized in that the conductive layer (9) terminates around the body (1) via a field distributor device (8) such as a layer of semiconductive varnish.

4. A current feedthrough according to any one of claims 1 to 3, characterized in that the volume of the receptacle (4) contains at least one toroidal core having a low-voltage winding (12) cooperating with the conductor of the feedthrough to form a medium-voltage current transformer, said toroidal core being protected against the risks of arcs striking with the live bare points by a metal cover (11) provided with a hole enabling it to be threaded over the axial body (1), said cover being grounded by being in contact with the inside metal-plating of the receptacle.

5. A current feedthrough according to any one of claims 1 to 4, characterized in that it includes a support bracket (5) made of an insulating material united with the outside face of the skirt (4), said support bracket having a fixing surface enabling it to be fixed to a metal wall parallel to the axis of the feedthrough.

6. A current feedthrough according to claim 5, characterized in that the support bracket (5) is integrally molded with the remainder of the feedthrough.

7. A current feedthrough according to claim 5 or 6, characterized in that the support bracket is provided with a hole (6) opening out inside the receptacle and serving to pass the wires from the current-sensing cores.

8. A current feedthrough according to any one of claims 2 to 7, characterized in that the metal-plating (9) of the body (2) cooperates with the conductor (1) to form a medium-voltage capacitance which, grounded via a low-voltage capacitor or via a stray capacitance situated outside the current feedthrough, thus forms a capacitive voltage divider capable of powering a protective device or a luminous signalling device for indicating the presence of voltage on the conductor of the feedthrough.

9. A current feedthrough according to any one of claims 1 to 8, characterized in that, at least between its top end (2A) and the top surface of the flange, the body (1) is shaped conically so as to enable an insulating sleeve (18) made of a flexible material to be fitted over it, said sleeve having a plane bottom end (18A) provided with holes that can be disposed facing the holes in the flange (10), thereby enabling the sleeve to be fixed onto said flange so as to close the receptacle.

10. A current feedthrough according to claim 9, characterized in that the sleeve (18) is fixed onto the flange (10) via an insulating ring (18B) providing sealing between the inside and the outside of the receptacle, by uniformly compressing the end (18A) of the sleeve (18) onto the flange (10).

11. A current feedthrough according to claim 9 or 10, characterized in that the sleeve is provided with fins.

12. A current feedthrough according to any one of claims 1 to 11, characterized in that the outside of the bottom (4') is provided with one or more integrally molded concentric fins (20).

13. A current feedthrough according to any one of claims 1 to 12, characterized in that the conductor (31) is of circular section and is provided at its top end (31A) with an axial hole enabling it to receive a sliding contact (27), the top portion of the body being in the shape of a cone of standardized dimensions enabling it to receive a pluggable terminal (32) of a medium-voltage cable.
